# EUROPEAN PATENT APPLICATION

(11) **EP 4 513 152 A1**
(43) Date of publication of application: **26.02.2025**
(21) Application number: 24189303.1
(22) Date of filing: 18.07.2024
(51) Int. Cl.: G01H 1/00, G01M 13/028, G05B 23/02

(54) **SYSTEM AND METHOD FOR VIBRATION ANALYSIS**

(30) Priority: 20.07.2023 US 202363527851 P; 29.03.2024 US 202418621736
(71) Applicant: Schneider Electric Systems USA, Inc., Foxborough, MA 02035 (US)
(72) Inventor: Mark, GREEN, Worthing (GB); Anup, THIRUMALESHWARA, Worthing (GB)
(74) Representative: Manitz Finsterwald Patent- und Rechtsanwaltspartnerschaft mbB

(57) **Abstract**

A system and method for providing abnormality diagnosis of a mechanical device having one or more components. A sensor system, having one or more sensor devices, detects movement/vibration of one or more observed components of the mechanical device. A control system determines vibration measurements of the one or more components based on their detected motion/vibration. One or more Machine Learning (ML) and/or Artificial Intelligence (Al) techniques are utilized to determine abnormal operation of the one or more components by comparing a determined vibration measurement of an observed component against that component's expected normal vibration measurement value during operation of the mechanical device. Abnormal operation is determined when the determined vibration measurement of an observed component exceeds its expected normal vibration measurement by a threshold value.

## Description

### CROSS REFERENCE TO RELATED APPLICATIONS

This application claims priority to U.S. Patent Application Serial No. 63/527,851 filed July 20, 2023, which is incorporated herein by reference in its entirety.

### Background

### 1. FIELD

The illustrated embodiments relate generally to the field of vibration analysis and more particularly, but not by way of limitation, to an analyzer and control system, and method to determine abnormal operation of a mechanical device though vibration analysis using Artificial Intelligence (AI) and/or Machine Learning (ML) techniques.

### 2. DESCRIPTION OF RELATED ART

The reliable mechanical operation and condition of appliances, machinery, and equipment, such as industrial appliances, are critical to not only the economic success of an operation or business, but also to the safety of personnel, property, and the equipment itself. Such operations and businesses may include, for example, factories, refineries, hospitals, storage facilities, data centers, retail establishments, and manufacturing facilities. As such, the regular and routine maintenance and testing of the mechanical operation and condition of such equipment is necessary and critical. Similarly, as equipment parts become worn or damaged, these conditions should be expeditiously identified and corrected as needed.

Unfortunately, although regular and routine maintenance is necessary and critical, it is often time consuming, requires specialized knowledge, often requires dedicated technical personnel and equipment, and is expensive and disruptive. Depending on the operation or process, such as a manufacturing process, the time that equipment is off-line to perform testing can interrupt production schedules and harm overall business operations. The risk of inadvertently damaging equipment while disassembling and reassembling (which is often required) for testing or improperly performing a test is significant. Any unexpected or improperly handled step may needlessly extend an equipment outage resulting in operational losses. Further, many testing procedures are inefficient, imprecise, not properly performed, and may result in replacing parts that do not need to be replaced. All of these issues cause significant economic harm.

Similarly, the testing itself can be expensive, separate and apart from the other issues just discussed. For a variety of reasons, businesses often do not have the economic resources to employ technical personnel to perform needed testing, and the costs to hire third party contractors can also be economically challenging. Such testing, however, can be critical to the economic viability of an operation as well as to provide a safe operating environment to protect both life and property.

Further, such performance tests of the mechanical operations of a device may be inaccurate and result in wrong conclusions. For example, the testing of the mechanical operations for a large mechanical device, such as stone grinding devices, is difficult, time consuming, and results may be incorrect.

### SUMMARY

The purpose and advantages of the below described illustrated embodiments will be set forth in and apparent from the description that follows. Additional advantages of the illustrated embodiments will be realized and attained by the devices, systems and methods particularly pointed out in the written description and claims hereof, as well as from the appended drawings.

To achieve these and other advantages and in accordance with the purpose of the illustrated embodiments, in one aspect, described is a system and method for providing abnormality diagnosis of a mechanical device having one or more components. A sensor system, having one or more sensor devices, detects movement/vibration of one or more observed components of the mechanical device during operation of the mechanical device. A control system is operatively coupled to the sensor system for receiving, from the sensor system, the detected movement/vibration data of the one or more observed components of the mechanical device. The control system is configured and operational to determine vibration measurements of the one or more components based on the detected motion/vibration of the one or more components. One or more Machine Learning (ML) and/or Artificial Intelligence (AI) techniques are preferably utilized to determine abnormal operation of the one or more components by comparing a determined vibration measurement of an observed component against that component's expected normal vibration measurement value during operation of the mechanical device. Abnormal operation is determined when the determined vibration measurement of an observed component exceeds its expected normal vibration measurement by a threshold value. The control system is preferably further operative and configured to provide notification of abnormal operation of the one or more components when one or more of the components is determined to have abnormal operation based upon its vibration measurement.

For instance, it is to be appreciated and understood that monitoring/determining how vibration of one or more components of a mechanical device increases with speed, fosters optimal performance of the mechanical device. For example, the highest output rate that does not cause excessive wear on the equipment may be found and used to extend the life of the equipment/mechanical device in a plant. In one aspect of the illustrated embodiments, the use of non-contact sensors to measure vibration is preferable to cabling and installing accelerometers throughout the plant. For example, an image capture can be used to monitor large areas of the plant and see multiple points of vibration at the same time (e.g., it can detect vibration where it was not expected).

In accordance with certain illustrated embodiments, images of one or more components of a mechanical device may be captured and amplified, so as to be utilized with AI/ML techniques to optimize performance of the mechanical device and also to predict possible failure of the equipment impacting production. An example market segment for is metals, minerals and mning, and an example area is grinding and concentration phases of this segment.

In accordance with the illustrated embodiments, several key points to consider are wear associated with one or more components of a mechanical device, which is a key problem associated with vibration, and if identified early, preventive maintenance may be applied for managing better production cycles associated with the mechanical device. Controlling vibration often extends the life of machinery along with optimal performance of its production.

With regard to utilizing camera sensor components for detecting vibration, it is possible to observe a wider area so as to then select multiple points and measure the vibration at points in parallel. For instance, image amplification may be used to exaggerate the deflections so faults can be found. An individual pixel's deflection may be measured and used to measure the vibration frequencies and amplitude. The vibration may be correlated to process automation control settings for a mechanical device for extending the life of equipment. Further, by integrating the vibration measurements from the camera sensors with alarms, a device operator can be notified that a condition is worsening so the operator can take preventative action.

### BRIEF DESCRIPTION OF THE DRAWINGS

So that those skilled in the art to which the subject disclosure appertains will readily understand how to make and use the devices and methods of the subject disclosure without undue experimentation, preferred illustrated embodiments thereof will be described in detail herein below with reference to certain figures, wherein:
FIG. 1 illustrates an example communication network utilized with one or more of the illustrated embodiments;
FIG. 2 illustrates an example network device/node utilized with one or more of the illustrated embodiments;
FIG. 3 illustrates a diagram depicting an Artificial Intelligence (AI) device utilized with one or more of the illustrated embodiments;
FIG. 4 illustrates a diagram depicting an AI server utilized with one or more of the illustrated embodiments;
FIG. 5 illustrates a system level diagram depicting certain system components utilized with one or more of the illustrated embodiments; and
FIG. 6 illustrates a flowchart depicting a method of operation in accordance with one or more of the illustrated embodiments.

### DESCRIPTION OF CERTAIN EMBODIMENTS

The illustrated embodiments are now described more fully with reference to the accompanying drawings wherein like reference numerals identify similar structural/functional features. The illustrated embodiments are not limited in any way to what is illustrated as the illustrated embodiments described below are merely exemplary, which can be embodied in various forms, as appreciated by one skilled in the art. Therefore, it is to be understood that any structural and functional details disclosed herein are not to be interpreted as limiting, but merely as a basis for the claims and as a representation for teaching one skilled in the art to variously employ the discussed embodiments. Furthermore, the terms and phrases used herein are not intended to be limiting but rather to provide an understandable description of the illustrated embodiments.

Unless defined otherwise, all technical and scientific terms used herein have the same meaning as commonly understood by one of ordinary skill in the art to which these illustrated embodiments belong. Although any methods and materials similar or equivalent to those described herein can also be used in the practice or testing of the illustrated embodiments, exemplary methods and materials are now described.

It must be noted that as used herein and in the appended claims, the singular forms "a", "an," and "the" include plural referents unless the context clearly dictates otherwise. Thus, for example, reference to "a stimulus" includes a plurality of such stimuli and reference to "the signal" includes reference to one or more signals and equivalents thereof known to those skilled in the art, and so forth.

It is to be appreciated the illustrated embodiments discussed below preferably include a software algorithm, program or code residing on computer useable medium having control logic for enabling execution on a machine having a computer processor. The machine typically includes memory storage configured to provide output from execution of the computer algorithm or program.

As used herein, the term "software" is meant to be synonymous with any code or program that can be in a processor of a host computer, regardless of whether the implementation is in hardware, firmware or as a software computer product available on a disc, a memory storage device, or for download from a remote machine. The embodiments described herein include such software to implement the equations, relationships and algorithms described above. One skilled in the art will appreciate further features and advantages of the illustrated embodiments based on the above-described embodiments. Accordingly, the illustrated embodiments are not to be limited by what has been particularly shown and described, except as indicated by the appended claims.

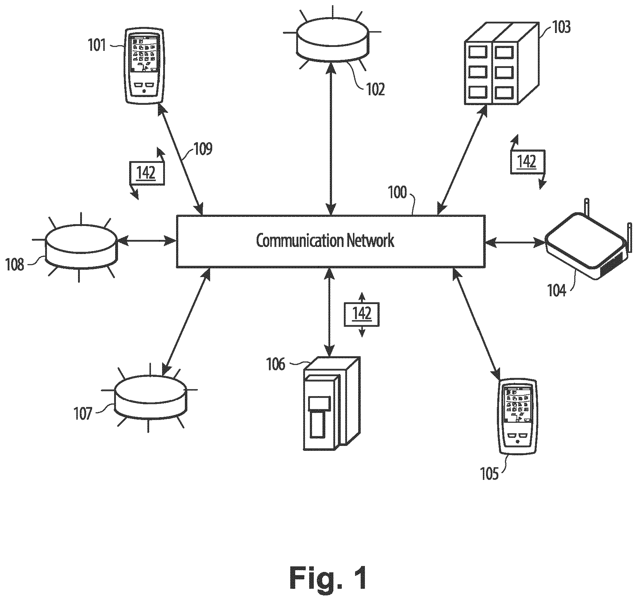

Turning now descriptively to the drawings, in which similar reference characters denote similar elements throughout the several views, FIG. 1 depicts an exemplary communications network 100 in which below illustrated embodiments may be implemented. It is to be understood a communication network 100 is a geographically distributed collection of nodes interconnected by communication links and segments for transporting data between end nodes, such as personal computers, work stations, smart phone devices, tablets, televisions, sensors and or other devices such as automobiles, etc. Many types of networks are available, with the types ranging from local area networks (LANs) to wide area networks (WANs). LANs typically connect the nodes over dedicated private communications links located in the same general physical location, such as a building or campus. WANs, on the other hand, typically connect geographically dispersed nodes over long-distance communications links, such as common carrier telephone lines, optical lightpaths, synchronous optical networks (SONET), synchronous digital hierarchy (SDH) links, or Powerline Communications (PLC), and others.

FIG. 1 is a schematic block diagram of an example communication network 100 illustratively comprising nodes/devices 101-108 (e.g., smart computing devices 101, sensors 102, client computing devices 103, smart phone devices 105, web servers 106, routers 107, switches 108, databases, and the like) interconnected by various methods of communication. For instance, the links 109 may be wired links or may comprise a wireless communication medium, where certain nodes are in communication with other nodes, e.g., based on distance, signal strength, current operational status, location, etc. Moreover, each of the devices can communicate data packets (or frames) 142 with other devices using predefined network communication protocols as will be appreciated by those skilled in the art, such as various wired protocols and wireless protocols etc., where appropriate. In this context, a protocol consists of a set of rules defining how the nodes interact with each other. Those skilled in the art will understand that any number of nodes, devices, links, etc. may be used in the computer network, and that the view shown herein is for simplicity. Also, while the embodiments are shown herein with reference to a general network cloud, the description herein is not so limited, and may be applied to networks that are hardwired.

As will be appreciated by one skilled in the art, aspects of the illustrated embodiments may be embodied as a system, method or computer program product. Accordingly, aspects of the illustrated embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the illustrated embodiments may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain or store a program for use by or in connection with an instruction execution system, apparatus, or device. A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing. Computer program code for carrying out operations for aspects of the illustrated embodiments may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the illustrated embodiments are described below with reference to flowchart illustrations and/or block diagrams of methods, apparatus (systems) and computer program products according to the illustrated embodiments. It will be understood that each block of the flowchart illustrations and/or block diagrams, and combinations of blocks in the flowchart illustrations and/or block diagrams, can be implemented by computer program instructions. These computer program instructions may be provided to a processor of a computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

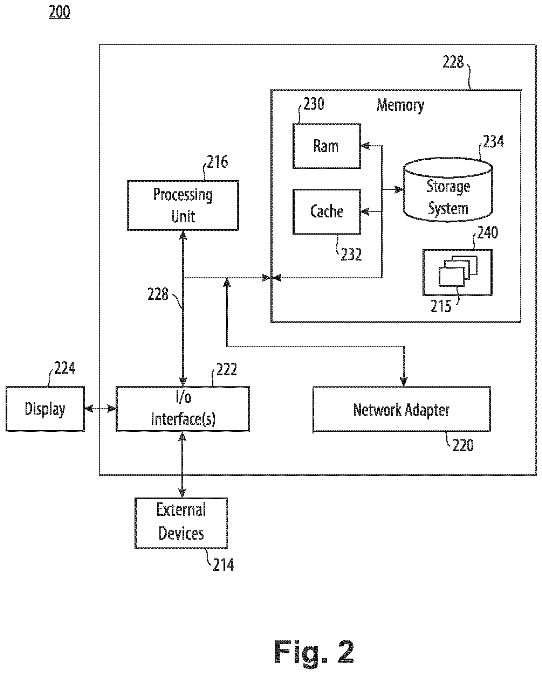

FIG. 2 is a schematic block diagram of an example network computing device 200 (e.g., client computing device 103, server 106, etc.) that may be used (or components thereof) with one or more embodiments described herein, e.g., as one of the nodes shown in the network 100, including control system 500 described further below. As explained above, in different embodiments these various devices are configured to communicate with each other in any suitable way, such as, for example, via communication network 100.

Device 200 is intended to represent any type of computer system capable of carrying out the teachings of various illustrated embodiments. Device 200 is only one example of a suitable system and is not intended to suggest any limitation as to the scope of use or functionality of the illustrated embodiments described herein. Regardless, computing device 200 is capable of being implemented and/or performing any of the functionality set forth herein.

Computing device 200 is operational with numerous other general purpose or special purpose computing system environments or configurations. Examples of well-known computing systems, environments, and/or configurations that may be suitable for use with computing device 200 include, but are not limited to, personal computer systems, server computer systems, thin clients, thick clients, hand-held or laptop devices, multiprocessor systems, microprocessor-based systems, set top boxes, programmable consumer electronics, network PCs, minicomputer systems, and distributed data processing environments that include any of the above systems or devices, and the like. Computing device 200 may be described in the general context of computer system-executable instructions, such as program modules, being executed by a computer system. Generally, program modules may include routines, programs, objects, components, logic, data structures, and so on that perform particular tasks or implement particular abstract data types. Computing device 200 may be practiced in distributed data processing environments where tasks are performed by remote processing devices that are linked through a communications network. In a distributed data processing environment, program modules may be located in both local and remote computer system storage media including memory storage devices. In accordance with the illustrated embodiments, computing device 200 is configured and operative to utilize vibration measurements received from one or more sensor devices (510) indicative of vibration of one more components of a mechanical device (520) for determining abnormal operation of the mechanical device (520) through analysis of the vibration measurements.

The components of device 200 may include, but are not limited to, one or more processors or processing units 216, a system memory 228, and a bus 218 that couples various system components including system memory 228 to processor 216. Bus 218 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus. Computing device 200 typically includes a variety of computer system readable media. Such media may be any available media that is accessible by device 200, and it includes both volatile and non-volatile media, removable and non-removable media.

System memory 228 can include computer system readable media in the form of volatile memory, such as random access memory (RAM) 230 and/or cache memory 232. Computing device 200 may further include other removable/non-removable, volatile/non-volatile computer system storage media. By way of example only, storage system 234 can be provided for reading from and writing to a non-removable, non-volatile magnetic media (not shown and typically called a "hard drive"). Although not shown, a magnetic disk drive for reading from and writing to a removable, non-volatile magnetic disk (e.g., a "floppy disk"), and an optical disk drive for reading from or writing to a removable, non-volatile optical disk such as a CD-ROM, DVD-ROM or other optical media can be provided. In such instances, each can be connected to bus 218 by one or more data media interfaces. As will be further depicted and described below, memory 228 may include at least one program product having a set (e.g., at least one) of program modules that are configured to carry out the functions of embodiments of illustrated embodiments.

Program/utility 240, having a set (at least one) of program modules 215, such as underwriting module, may be stored in memory 228 by way of example, and not limitation, as well as an operating system, one or more application programs, other program modules, and program data. Each of the operating system, one or more application programs, other program modules, and program data or some combination thereof, may include an implementation of a networking environment. Program modules 215 generally carry out the functions and/or methodologies of the illustrated embodiments as described herein, including analyzing vibration measurements detected from one or more sensor devices (510) indicative of vibration of one more components of a mechanical device (520) for determining abnormal operation of the mechanical device (520), preferably on a real-time basis.

Device 200 may also communicate with one or more external devices 214 such as a keyboard, a pointing device, a display 224, etc.; one or more devices that enable a user to interact with computing device 200; and/or any devices (e.g., network card, modem, etc.) that enable computing device 200 to communicate with one or more other computing devices. Such communication can occur via Input/Output (I/O) interfaces 222. Still yet, device 200 can communicate with one or more networks such as a local area network (LAN), a general wide area network (WAN), and/or a public network (e.g., the Internet) via network adapter 220. As depicted, network adapter 220 communicates with the other components of computing device 200 via bus 218. It should be understood that although not shown, other hardware and/or software components could be used in conjunction with device 200. Examples, include, but are not limited to: microcode, device drivers, redundant processing units, external disk drive arrays, RAID systems, tape drives, and data archival storage systems, etc.

FIGS. 1 and 2 are intended to provide a brief, general description of an illustrative and/or suitable exemplary environment in which the below described illustrated embodiments may be implemented. FIGS. 1 and 2 are exemplary of a suitable environment and are not intended to suggest any limitation as to the structure, scope of use, or functionality of an illustrated embodiment. A particular environment should not be interpreted as having any dependency or requirement relating to any one or combination of components illustrated in an exemplary operating environment. For example, in certain instances, one or more elements of an environment may be deemed not necessary and omitted. In other instances, one or more other elements may be deemed necessary and added.

It is to be understood the embodiments described herein are preferably provided with self-learning / Artificial Intelligence (AI) for analyzing vibration data received from one or more sensor devices (510) that is indicative of vibration of one more components of a mechanical device (520) for determining abnormal operation of the mechanical device (520), preferably on a real-time basis. Thus, preferably integrated into a control system 500 (having one or more components of computer system 200) coupled to a plurality of external databases / data sources is an AI system (e.g., an Expert System) that implements machine learning and artificial intelligence algorithms to conduct one or more of the above mentioned tasks, including analyzing vibration data received from one or more sensor devices (510) indicative of vibration of one more components of a mechanical device (520) for determining abnormal operation of the mechanical device (520) through analysis of the vibration measurements. For instance, the AI system may include two subsystems: a first sub-system that learns from historical data; and a second subsystem to identify and recommend one or more parameters or approaches based on the learning. It should be appreciated that although the AI system may be described as two distinct subsystems, the AI system can also be implemented as a single system incorporating the functions and features described with respect to both subsystems.

In accordance with the illustrated embodiments described herein, artificial intelligence refers to the field of studying artificial intelligence or methodology for making artificial intelligence, and machine learning refers to the field of defining various issues dealt with in the field of artificial intelligence and studying methodology for solving the various issues. Machine learning is defined as an algorithm that enhances the performance of a certain task through a steady experience with the certain task.

Also in accordance with the illustrated embodiments, an artificial neural network (ANN) is a model used in machine learning and may mean a whole model of problem-solving ability which is composed of artificial neurons (nodes) that form a network by synaptic connections. The artificial neural network can be defined by a connection pattern between neurons in different layers, a learning process for updating model parameters, and an activation function for generating an output value. The artificial neural network may include an input layer, an output layer, and optionally one or more hidden layers. Each layer includes one or more neurons, and the artificial neural network may include a synapse that links neurons to neurons. In the artificial neural network, each neuron may output the function value of the activation function for input signals, weights, and deflections input through the synapse.

Model parameters refer to parameters determined through learning and include a weight value of synaptic connection and deflection of neurons. A hyperparameter means a parameter to be set in the machine learning algorithm before learning, and includes a learning rate, a repetition number, a mini batch size, and an initialization function. The purpose of the learning of the artificial neural network may be to determine the model parameters that minimize a loss function. The loss function may be used as an index to determine optimal model parameters in the learning process of the artificial neural network. Machine learning may be classified into supervised learning, unsupervised learning, and reinforcement learning according to a learning method. The supervised learning may refer to a method of learning an artificial neural network in a state in which a label for learning data is given, and the label may mean the correct answer (or result value) that the artificial neural network must infer when the learning data is input to the artificial neural network. The unsupervised learning may refer to a method of learning an artificial neural network in a state in which a label for learning data is not given. The reinforcement learning may refer to a learning method in which an agent defined in a certain environment learns to select a behavior or a behavior sequence that maximizes cumulative compensation in each state.

Machine learning, which is implemented as a deep neural network (DNN) including a plurality of hidden layers among artificial neural networks, is also referred to as deep learning, and the deep learning is part of machine learning.

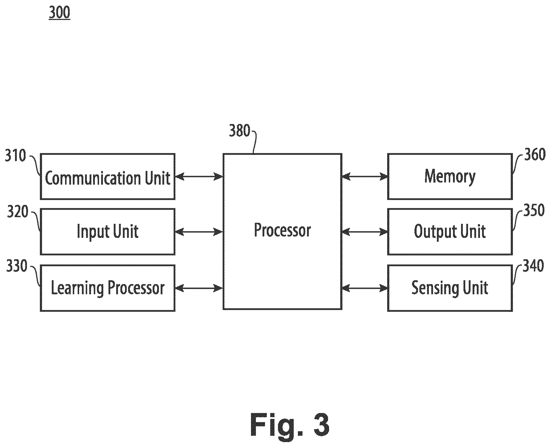

FIG. 3 illustrates an AI device 300 according to an embodiment of the illustrated embodiments. In accordance with the illustrated embodiments, the AI device 300 may be implemented by a control system (500) operatively coupled to one more sensor devices 510 configured to detect vibration measurements associated with a mechanical device 520, as described further herein.

Referring to now FIG. 3, in conjunction with FIGS. 1 and 2, the AI device 300 is operatively coupled to, or integrated with computing device 200, in accordance with the illustrated embodiments described herein. AI device 300 preferably includes a communication unit 310, an input unit 320, a learning processor 330, a sensing unit 340, an output unit 350, a memory 370, and a processor 380. The communication unit 310 may transmit and receive data to and from external devices such as other AI devices 300a to 300e and the AI server 400 by using wire/wireless communication technology. For example, the communication unit 310 may transmit and receive sensor information, a user input, a learning model, and a control signal to and from external devices.

The communication technology used by the communication unit 310 preferably includes GSM (Global System for Mobile communication), CDMA (Code Division Multi Access), LTE (Long Term Evolution), 5G, WLAN (Wireless LAN), Wi-Fi (Wireless-Fidelity), Bluetooth^{™}, RFID (Radio Frequency Identification), Infrared Data Association (IrDA), ZigBee, NFC (Near Field Communication), and the like.

The input unit 320 may acquire various kinds of data, including, but not limited to vibration measurements received from one or more sensor devices (510). The input unit 320 may acquire learning data for model learning and an input data to be used when an output is acquired by using learning model. The input unit 320 may acquire raw input data. In this case, the processor 380 or the learning processor 330 may extract an input feature by preprocessing the input data. The learning processor 330 may learn a model composed of an artificial neural network by using learning data. The learned artificial neural network may be referred to as a learning model. The learning model may be used to an infer result value for new input data rather than learning data, and the inferred value may be used as a basis for determination to perform a certain operation.

At this time, the learning processor 330 may perform AI processing together with the learning processor 330 of the AI server 400, and the learning processor 330 may include a memory integrated or implemented in the AI device 300. Alternatively, the learning processor 330 may be implemented by using the memory 370, an external memory directly connected to the AI device 300, or a memory held in an external device. The sensing unit 340 may acquire at least one of internal information about the AI device 300, ambient environment information about the AI device 300, and user information by using various sensors.

The output unit 350 preferably includes a display unit for outputting/displaying relevant information to a user in accordance with the illustrated embodiments described herein. The memory 370 preferably stores data that supports various functions of the AI device 300. For example, the memory 370 may store input data acquired by the input unit 320, learning data, a learning model, a learning history, and the like.

The processor 380 preferably determines at least one executable operation of the AI device 300 based on information determined or generated by using a data analysis algorithm or a machine learning algorithm. The processor 380 may control the components of the AI device 300 to execute the determined operation. To this end, the processor 380 may request, search, receive, or utilize data of the learning processor 330 or the memory 370. The processor 380 may control the components of the AI device 300 to execute the predicted operation or the operation determined to be desirable among the at least one executable operation. When the connection of an external device is required to perform a determined operation, the processor 380 may generate a control signal for controlling the external device and may transmit the generated control signal to the external device. The processor 380 may acquire intention information for the user input and may determine the user's requirements based on the acquired intention information. The processor 380 may acquire the intention information corresponding to the user input by using at least one of a speech to text (STT) engine for converting speech input into a text string or a natural language processing (NLP) engine for acquiring intention information of a natural language.

At least one of the STT engine or the NLP engine may be configured as an artificial neural network, at least part of which is learned according to the machine learning algorithm. At least one of the STT engine or the NLP engine may be learned by the learning processor 330, may be learned by the learning processor 340 of the AI server 400, or may be learned by their distributed processing. The processor 380 may collect history information including the operation contents of the AI device 300 or the user's feedback on the operation and may store the collected history information in the memory 370 or the learning processor 330 or transmit the collected history information (e.g., relating to operation of mechanical device 510) to the external device such as the AI server 400. The collected history information may be used to update the learning model.

The processor 380 may control at least part of the components of AI device 300 so as to drive an application program stored in memory 370. Furthermore, the processor 380 may operate two or more of the components included in the AI device 300 in combination so as to drive the application program.

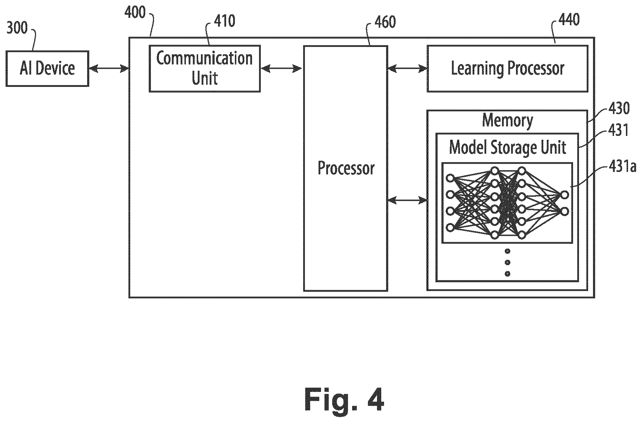

FIG. 4 illustrates an AI server 400 according to the illustrated embodiments. It is to be appreciated that the AI server 400 may refer to a device that learns an artificial neural network by using a machine learning algorithm or uses a learned artificial neural network. The AI server 400 may include a plurality of servers to perform distributed processing, or may be defined as a 5G network. At this time, the AI server 400 may be included as a partial configuration of the AI device 300, and may perform at least part of the AI processing together. The AI server 400 may include a communication unit 410, a memory 430, a learning processor 440, a processor 460, and the like. The communication unit 410 can transmit and receive data to and from an external device such as the AI device 300. The memory 430 may include a model storage unit 431. The model storage unit 431 may store a learning or learned model (or an artificial neural network 431a) through the learning processor 440.

The learning processor 440 may learn the artificial neural network 431a by using the learning data. The learning model may be used in a state of being mounted on the AI server 400 of the artificial neural network, or may be used in a state of being mounted on an external device such as the AI device 300. The learning model may be implemented in hardware, software, or a combination of hardware and software. If all or part of the learning models are implemented in software, one or more instructions that constitute the learning model may be stored in memory 430. The processor 460 may infer the result value for new input data by using the learning model and may generate a response or a control command based on the inferred result value.

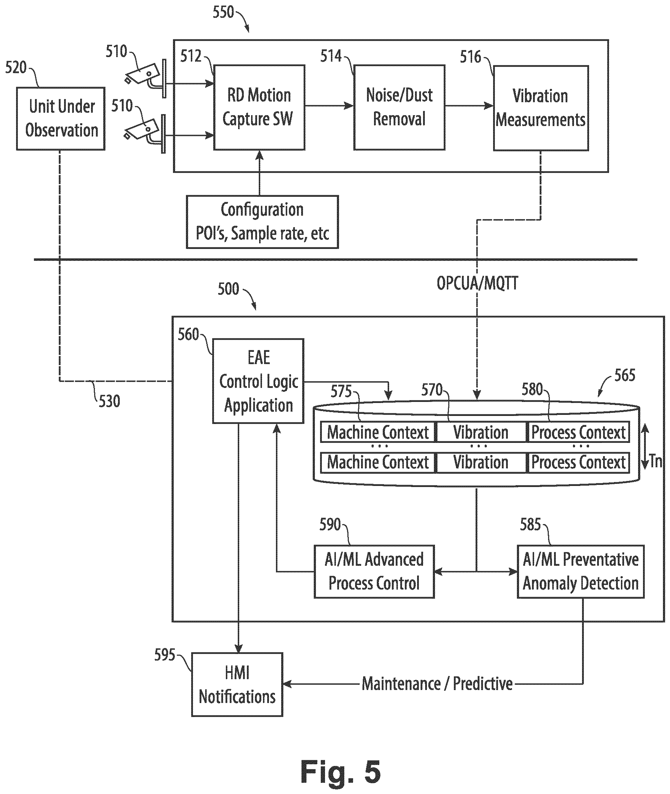

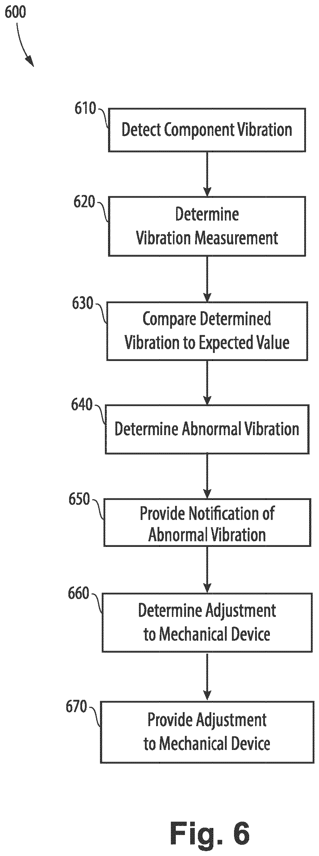

With the exemplary communication network 100 (FIG. 1), computing device 200 (FIG. 2), AI device 300 (FIG. 3) and AI server 400 (FIG. 4) being generally shown and discussed above, description of certain illustrated embodiments will now be provided with reference to FIGS. 5 and 6. It is to be understood and appreciated that FIGS. 1-6 are intended to provide a brief, general description of an illustrative and/or suitable exemplary environment in which the below described illustrated embodiments may be implemented. FIGS. 1-6 are exemplary of a suitable environment and are not intended to suggest any limitation as to the structure, scope of use, or functionality of an illustrated embodiment. A particular environment should not be interpreted as having any dependency or requirement relating to any one or combination of components illustrated in an exemplary operating environment. For example, in certain instances, one or more elements of an environment may be deemed not necessary and omitted. In other instances, one or more other elements may be deemed necessary and added.

It is to be understood and appreciated that exemplary embodiments implementing one or more components of FIGS. 1-4 relate to utilization of vibration measurements received from one or more sensor devices (510) indicative of vibration of one more components of a mechanical device (520) for determining abnormal operation of the mechanical device (520) through preferably Artificial Intelligence (AI) / Machine Learning (ML) analysis of the vibration measurements. In the illustrated embodiments of below described FIGS. 5 and 6, the sensor devices (510) are preferably non-contact sensor (e.g., camera devices) that utilize non-contact optical methods of measuring vibration, combined with process control provided by control system 500 (as also described below), to detect abnormal operation of a mechanical device 510 having one or more moving components, so as to extend the life of mechanical devices, amongst other advantages. For instance, in one example implementation, a camera sensor device 510 is positioned to capture images of an industrial equipment 520 (e.g., having a rotating drum for processing minerals, metals and materials output applications), whereby software is configured and operative to isolate areas of interest (e.g., spatial points) in the images. In one exemplary scenario, using motion amplification, pixel movements are exaggerated and using AI techniques, changes from the normal range of vibration of the industrial equipment are detected. For instance, detected may be increases in motion, changes in feed stock, which are input to a control system 500. Additionally, preferably input to the control system 500 are operating parameters (e.g., machine context and process context data) associated with the mechanical device 520. As described in more detail below, in one exemplary scenario, the control system 500 utilizes one or more AI/ML techniques for comparing the increase in vibration to the operating speed of a moving component of the device 520 (e.g., a rotating drum) so as to predict the impact on wear. The one or more AI/ML techniques may detect early signs of wear and tear, such that the expected lifetime of device 520 can be accurately forecasted. Additionally, if the vibration (movement) increases for such a component of the device 520, a warning signal may be generated by control system 500 and provided to designated personel (e.g., plant maintenance engineers). Other illustrative embodiments include control system 500 determining one or more corrective operational settings for device 520 so as to mitigate abnormal operation of device 520 such that device 520 operates within the tolerances of normal operation relative to its current operating parameters (e.g., machine context and process context data) so as to extend life of device 520, amongst other advantages.

With the exemplary communication network 100 (FIG. 1), computing device 200 (FIG. 2), AI device 300 (FIG. 3) and AI server 400 (FIG. 4) being generally shown and discussed above, description of certain illustrated embodiments will now be provided. With reference now to FIG. 5, shown is an exemplary system, utilizing one or more of the aforementioned communication network 100 (FIG. 1), computing device 200 (FIG. 2), AI device 300 (FIG. 3) and AI server 400 (FIG. 4), depicting a control system 500 that preferably utilizes one or more AI/ML techniques for analyzing vibration data received from a sensor system 550 having one or more sensor devices 510 for detecting vibration of one more components of a mechanical device 520 for determining abnormal operation of the mechanical device 520, preferably on a real-time basis (and as will be described in further detail below with reference to process 600 of FIG. 6).

For illustrative and descriptive purposes, the mechanical device 520 having one or more moving components is referred to herein as a large industrial stone grinder, example types including (but not limited to): belt grinders, centerless grinders, and bench grinders. In the exemplary device 520 discussed herein, the grinder 520 has at least one moving component consisting of a rotating drum of which is the subject of vibration detection analysis discussed herein. It is to be appreciated and understood the illustrated embodiments discussed herein are not to be understood to be limited to a such a grinder for a mechanical device 520 as numerous mechanical devices having one or more moving (or non-moving) components (e.g., having conveyers, pipes, or gear boxes, etc, that are coupled to a source of vibration) are to be encompassed. For instance, when vibration changes are detected upon a component (e.g., a conveyor belt and/or pipe) that isolate from a process change, an anomaly event may be detected by control system 500.

As shown in FIG. 5, the sensor system 550 preferably includes one or more sensor devices 510 capable of acquiring data from one or more moving components (e.g., a rotating drum) of mechanical device 520 (e.g., a stone grinder) for determining vibration of the one or more components of device 520 upon analysis of the acquired sensor data. It is to be appreciated the one or more sensor devices 510 are preferably non-contact sensor devices (e.g., camera devices), but the illustrated embodiments are not to be understood to be limited thereto as they may also encompass contact type sensor components. As shown in FIG. 5, the one or more sensor devices 510 consist of camera devices positioned to capture images of the mechanical device 520. The one or more cameras 510 may be coupled to motion capturing software 512 that is configured and operative to isolate areas of interest in the captured image so as to utilize motion amplification for exaggerating pixel movements for vibration detection purposes. The sensor system 550 may additionally have software for removing/mitigation noise (e.g., dust) in retrieved images 514, and software for determining vibrations in the captured images for measuring deflection, displacement, movement, and vibration not ordinarily visible to the human eye. These measurements preferably include the amplitude and frequency associated with the detected vibrations of the one or more components of the device 520. An example of such a sensor system 550 is commercially available from RDI Technologies^{™}, the components teachings of which are incorporated herein.

With continued reference to FIG. 5, the control system 500 is operatively and communicatively coupled to sensor system 550. In accordance with the illustrated embodiments, the control system 500 is preferably remotely located from sensor system 550 (e.g., positioned in remote geographic location) and is coupled to sensor system 550 via communications network 100 (e.g., which may include usage of suitable TCP/IP communication techniques) for transmitting data therebetween. For instance, in certain embodiments, the control system 500 is operatively coupled to plurality of geographically located separate sensor systems 550 (each associated with a different mechanical device 520) so as to be operative and configured to detect abnormal vibration operation of a plurality of different geographically located mechanical devices 520, preferably on a real-time basis, in accordance with the teachings herein.

Control system 500 preferably includes control logic (e.g., program modules 215 of program/utility 240) utilizing one or more AI/ML techniques for analyzing vibration data received from a sensor system 550 for detecting vibration of one more components of a mechanical device 520 for determining abnormal operation of the mechanical device 520, preferably on a real-time basis. As described further below with reference to process 600 of FIG. 6, the control system 500 is preferably coupled to a database 565 having vibration data 570 received from sensor system 550 stored preferably in correlation with machine context data 575 and process context data 580 associated with a component (e.g., a rotating drum) of the mechanical device 520 at the time of vibration detection by sensor system 550. As understood by one skilled in the art, process context data is typically operational state data that stores information about a particular process (e.g., it contains information needed to restart the process of mechanical device 520 at a later time). And context data, concerning machine learning, typically encompasses the historical data, environment, and relevant factors that a machine learning model considers to make accurate predictions or decisions regarding operation of mechanical device 520. As described further below with description to process 600 of FIG. 6, control system 500 analyzes the received vibration data 570 received from sensor system 550 preferably in conjunction with its correlated machine context data 575 and process context data 580, utilizing one or more AI/ML techniques to determine: 1) anomaly detection/operation of device 520 (585) (and provide notification of such anomaly operation of device 520 (595)); and 2) determination of one or more correction actions (e.g., operational settings for device 520) that may be input to device 520 for obviating its detected abnormal operation (590).

With the exemplary control system 500 and sensor system 550 of FIG. 5 being generally shown and discussed above (in conjunction with FIGS. 1-4), with reference now to FIG. 6 (and with continuing reference to FIGS. 1-5), shown is a flow chart demonstrating implementation of process 600 utilizing AI/ML techniques 585, 590 for analyzing vibration data 570 received from one or more sensor devices 510 of a sensor system 550 that is indicative of vibration of one more components of a mechanical device 520 for determining abnormal operation of the mechanical device 520, preferably on a real-time basis. It is noted that the order of steps of process 600 shown in FIG. 6 is not required, so in principle, the various steps may be performed out of the illustrated order. Also, certain steps may be skipped, different steps may be added or substituted, or selected steps or groups of steps may be performed in a separate application following the embodiments described herein.

Starting at step 600, motion/vibration data of one or more components (e.g., a rotating drum) of device 520 (e.g., a stone grinder), as observed and detected by the one or more camera devices 510 of sensor system 550, is input (via a communications network 100) to the control system 550. In certain illustrated embodiments, each camera sensor device 510 detects motion upon multiple spatial points on the mechanical device 520, wherein each camera sensor device 510 detects motion of the one more components (associated with an aforesaid spatial point) to detect at least vibration associated with each detected spatial point of the mechanical device 520. The control system 550 is operative and configured, preferably utilizing one or more AI/ML techniques, to analyze the received motion data (step 610) to determine vibration movement (e.g., measured against a period of time) of the observed one or more components of device 520, step 620. In accordance with the illustrated embodiments, the motion data may consist of vibration spectrum measurements. It is to be understood the aforesaid determined vibration movement 570 of the one or more components of device 520 is preferably stored in database 565 in correlation with the machine context data 575 and process context data 580 associated with a component (e.g., a rotating drum) of the device 520 at the time of vibration detection by sensor system 550.

At step 630, the control system 500, preferably utilizing the one or more AI/ML techniques (e.g., 585), determines abnormal vibration of the one or more components by comparing a determined vibration measurement (e.g., a determined vibration measurement spectrum) 570 of the detected component of device 520 against that component's normal vibration measurement expected during operation of the mechanical device 520. Next, at step 640, abnormal operation of the observed component is determined when the determined vibration measurement of the observed component exceeds its expected normal vibration measurement by a threshold value.

In accordance with the illustrated embodiments, the one or more AI/ML techniques utilize both machine context data 575 and process context data 580 associated with operation of the mechanical device 520 for determining abnormal operation of the observed vibrating components. For instance, in certain scenarios, the machine context data may include one or more configured operating parameters for the one or more vibrating components, and the process context data may include parameters of an output of the mechanical device 520. It is to be further understood and appreciated the one or more AI/ML techniques may include utilization of one or more of a XG Boost algorithm and a neural network algorithmic technique(s). For instance, the one or more AI/ML techniques may include applying images captured from the one or more sensors devices 510 to a recurrent convolutional neural network for determining when a detected vibration measurement spectrum 570 of an observed component of the mechanical device 510 exceeds its expected normal vibration measurement by a threshold value. It is to be further understood and appreciated that in certain illustrated embodiments, the control system 500 is operative and configured to determine, preferably utilizing one or more ML techniques, the expected normal vibration (e.g., vibration spectrum) for the one or more vibrating components, preferably utilizing the machine context data 575 and process context data 580 associated with operation of the mechanical device 520. It is to be still further understood and appreciated that in certain illustrated embodiments, the control system 500 is operative and configured to train a Machine Learning (ML) model for determining the expected normal vibration measurements (e.g., vibration spectrum) for the one or more observed vibrating components, which may utilize the machine context data 575 and the process context data 580 associated with operation of the mechanical device 520. For instance, training the aforesaid ML model may include utilizing images captured from the one or more camera sensors 510 of the sensor system 500 so as to be utilized in a recurrent convolutional neural network for determining the expected normal vibration spectrum for the one or more vibrating components of device 520.

Next, at step 650, upon determination of abnormal vibration/operation of the aforesaid observed vibrating components of mechanical device 520, an electronic notification signal 595 is transmitted, preferably in a desired media format (e.g., SMS, MMS, email, and the like), preferably to one or more designated recipients (e.g., a plant manager) providing notification/alarm of the determined abnormal operation of the observed component of the device 520.

In certain illustrated embodiments, at step 660, the control system 500 is further operative and configured to, when it is determined an observed component is determined to have abnormal vibration/operation (step 340), to determine adjustment to one or more operating parameters of the mechanical device 520 such that the determined abnormal vibrating/operating component is caused to operate within it's expected normal vibration spectrum during operation of the mechanical device 520. And then at step 670, the control system 500 provides a control signal 530, including the aforesaid adjustment parameters for device 520, to the mechanical device 520, causing adjustment to one or more operating parameters of the mechanical device 520 such that the determined abnormal operating component is caused to operate within it's expected normal vibration tolerances during operation of the mechanical device 520.

With certain illustrated embodiments described above, it is to be appreciated that various non-limiting embodiments described herein may be used separately, combined or selectively combined for specific applications. Further, some of the various features of the above non-limiting embodiments may be used without the corresponding use of other described features. The foregoing description should therefore be considered as merely illustrative of the principles, teachings and exemplary embodiments of the illustrated embodiments, and not in limitation thereof.

It is to be understood that the above-described arrangements are only illustrative of the application of the principles of the illustrated embodiments. Numerous modifications and alternative arrangements may be devised by those skilled in the art without departing from the scope of the illustrated embodiments, and the appended claims are intended to cover such modifications and arrangements.

## Claims

1. A method for abnormality diagnosis of a mechanical device having one or more moving components, comprising:
receiving, in a computer control system, motion of the one or more components during operation of the mechanical device detected by one or more sensor devices operatively associated with the mechanical device;
determining, by the computer control system coupled to the one or more sensors, vibration measurement spectrums of the one or more components based on the detected motion of the one or more components, wherein one or more Machine Learning (ML) techniques are used to determine abnormal operation of the one or more components by comparing a determined vibration measurement spectrum of a said component against that component's expected normal vibration measurement spectrum during operation of the mechanical device such that abnormal operation is determined when the determined vibration measurement spectrum of a said component exceeds its expected normal vibration measurement spectrum by a threshold value; and
providing, by the control system, notification of abnormal operation of the one or more components when one or more of the components is determined to have abnormal operation.

2. The method as recited in claim 1, wherein the one or more ML techniques utilizes both machine context data and process context data relating to operation of the mechanical device for determining abnormal operation of the one or more moving components whereby the machine context data includes one or more configured operating parameters for the one or more moving components and the process context data relates to parameters of an output of the mechanical device.

3. The method as recited in claim 2, further including determining, by the control system using the one or more ML techniques, the expected normal vibration spectrum for the one or more moving components utilizing the machine and process context data relating to operation of the mechanical device.

4. The method as recited in claim 3, further including, responsive to determination a said component is determined to have abnormal operation, determine adjustment to one or more operating parameters of the mechanical device such that the determined abnormal operating component is caused to operate within it's expected normal vibration spectrum during operation of the mechanical device.

5. The method as recited in claim 4, further including providing a control signal from the control system to the mechanical device including the determined adjusted operating paramters, causing adjustment to one or more operating parameters of the mechanical device such that the determined abnormal operating component is caused to operate within it's expected normal vibration spectrum during operation of the mechanical device.

6. The method as recited in claim 3, wherein the one or more ML techniques includes utilization of one or more of a XG Boost algorithm and a neural network algorithmic technique.

7. The method as recited in claim 6, further including training a Machine Learning (ML) model for determining the expected normal vibration spectrum for the one or more moving components utilizing the machine and process context data relating to operation of the mechanical device.

8. The method as recited in claim 1, wherein the one or more sensor devices include one or more optical sensor devices whereby each optical sensor device detects motion upon multiple spatial points on the mechanical device.

9. The method as recited in claim 8, wherein one or more of the optical sensor devices consist of a camera device operatively coupled to software for detecting motion of the one more components operative to detect at least vibration associated with each detected spatial point of the mechanical device.

10. The method as recited in claim 1, wherein the control system is operatively coupled to a plurality of geographically remote sensor systems, wherein each senor system has one or more sensor devices operatively associated with a respective mechanical device.

11. The method as recited in claim 8, wherein the one or more ML techniques includes applying images captured from the one or more optical sensors to a recurrent convolutional neural network for determining when a detected vibration measurement spectrum of a said component of the mechanical device exceeds its expected normal vibration measurement by a threshold value.

12. The method as recited in claim 11, further including training, utilizing images captured from the one or more optical sensors, the recurrent convolutional neural network for determining the expected normal vibration spectrum for the one or more moving components.

13. The method as recited in claim 1, wherein the one or more moving components consist of a rotating drum associated with a mechanical device used for one or more of minerals, metals and materials output applications.

14. The method as recited in claim 1, wherein motion data detected from the one or more sensor devices is wirelessly transmitted via a communications network to the computer diagnostic control system remotely located from the mechanical device.

15. The method as recited in claim 1, wherein determining when the determined vibration measurement spectrum of a said component exceeds its expected normal vibration measurement spectrum by a threshold value is performed in real-time.

16. A system for abnormality diagnosis of a mechanical device having one or more moving components, comprising:
one or more sensor devices, operatively associated with the mechanical device, for detecting motion of the one or more components during operation of the mechanical device;
a computer control system coupled to the one or more sensors, including:
a database having memory; and
a processor disposed in communication with said memory, and configured to issue a plurality of instructions stored in the memory, wherein the instructions cause the processor to:
determine vibration measurement of the one or more components based on the detected motion of the one or more components;
determine abnormal operation of the one or more components utilizing one or more Machine Learning (ML) techniques by comparing the determined vibration measurement of a said component against that component's expected normal vibration measurement during operation of the mechanical device such that abnormal operation is determined when the determined vibration measurement of a said component exceeds its expected normal vibration measurement by a threshold value; and
providing notification of abnormal operation of the one or more components when one or more of the components is determined to have abnormal operation.

17. The system as recited in claim 16, wherein the one or more ML techniques utilizes both machine context data and process context data relating to operation of the mechanical device for determining abnormal operation of the one or more moving components whereby the machine context data includes one or more configured operating parameters for the one or more moving components and the process context data relates to parameters of an output of the mechanical device.

18. The system as recited in claim 17, wherein the processor is further configured to:
determine adjustment to one or more operating parameters of the mechanical device when it is determined a said component is determined to have abnormal operation; and
providing a control signal from the control system to the mechanical device, causing adjustment to one or more operating parameters of the mechanical device such that the determined abnormal operating component is caused to operate within it's expected normal vibration tolerances during operation of the mechanical device.

19. The system as recited in claim 16, wherein the one or more sensor devices include one or more optical sensor devices whereby each optical sensor device detects motion upon multiple spatial points on the mechanical device.

20. A method for abnormality diagnosis of a mechanical device having one or more moving components, comprising:
receiving, in a computer control system, from one or more optical sensor devices, motion of the one or more components during operation of the mechanical device, whereby each optical sensor device detects motion upon multiple spatial points on the mechanical device;
determining, by the computer control system coupled to the one or more optical sensor devices, vibration measurement of the one or more components based on the detected motion of the one or more components, wherein one or more Machine Learning (ML) techniques utilizing machine context data and process context data relating to operation of the mechanical device; and
determining, by the control system utilizing the ML techniques, abnormal operation of the one or more components by comparing a determined vibration measurement of a said component against that component's expected normal vibration measurement during operation of the mechanical device such that abnormal operation is determined when the determined vibration measurement of a said component exceeds its expected normal vibration measurement by a threshold value.
